# EUROPEAN PATENT APPLICATION

(11) **EP 4 579 838 A1**
(43) Date of publication of application: **02.07.2025**
(21) Application number: 23857110.3
(22) Date of filing: 27.07.2023
(51) Int. Cl.: H01M 10/052, H01M 4/131, H01M 4/36, H01M 4/505, H01M 4/525, H01M 50/414, H01M 50/423, H01M 50/434, H01M 50/446, H01M 50/451, H01M 50/46

(54) **NON-AQUEOUS ELECTROLYTE SECONDARY BATTERY**

(30) Priority: 26.08.2022 JP 2022135408
(71) Applicant: Panasonic Intellectual Property Management Co., Ltd., Kadoma-shi, Osaka 571-0057 (JP)
(72) Inventor: IWAMOTO, Takuya, Kadoma-shi, Osaka 571-0057 (JP); GOTO, Natsumi, Kadoma-shi, Osaka 571-0057 (JP); TSUKASAKI, Takashi, Kadoma-shi, Osaka 571-0057 (JP)
(74) Representative: Eisenführ Speiser
(86) International application number: PCT/JP2023/027563
(87) International publication number: WO 2024/042994

(57) **Abstract**

Provided is a lithium ion secondary battery having high capacity and excellent high-temperature storage characteristics. A non-aqueous electrolyte secondary battery according to one embodiment is characterized by comprising a positive electrode, a negative electrode, a separator that separates the positive electrode and the negative electrode from each other, and a non-aqueous electrolyte, wherein: the positive electrode contains a lithium-containing composite oxide and a sulfonic acid compound present on a particle surface of the lithium-containing composite oxide; the sulfonic acid compound is represented by formula (I); the separator has a base material layer and a heat-resistant layer formed on the surface of the base material layer; the heat-resistant layer faces at least the positive electrode; and the thickness T1 of the base material layer and the thickness T2 of the heat-resistant layer satisfy the relationship T2/T1≥0.2. (In the formula, A is a group 1 element or a group 2 element, R is a hydrocarbon group, and n is 1 or 2.)

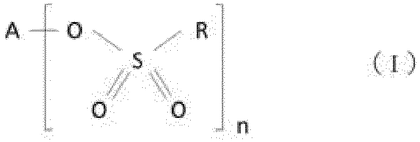

## Description

### TECHNICAL FIELD

The present disclosure relates to a non-aqueous electrolyte secondary battery.

### BACKGROUND ART

Patent Literature 1 proposes an active material in which a surface layer including a lithium sulfonate compound is formed on particle surfaces of lithium titanate mainly containing Li₄Ti₅O₁₂. Patent Literature 1 describes that use of this active material for a negative electrode active material may inhibit change in resistance before and after storage of a charged battery.

### CITATION LIST

### PATENT LITERATURE

PATENT LITERATURE 1: Japanese Unexamined Patent Application Publication No. 2018-6164

### SUMMARY

It is an important challenge in the non-aqueous electrolyte secondary battery to improve high-temperature storage characteristics while keeping high capacity. The conventional art including Patent Literature 1 cannot sufficiently deal with the above challenge, and still has large room for improvement.

A non-aqueous electrolyte secondary battery of an aspect of the present disclosure comprises: a positive electrode; a negative electrode; a separator that separates the positive electrode and the negative electrode from each other; and a non-aqueous electrolyte, wherein the positive electrode includes a lithium-containing composite oxide and a sulfonate compound present on particle surfaces of the lithium-containing composite oxide, the sulfonate compound is a compound represented by a formula (I), the separator has a base material layer and a heat-resistant layer formed on a surface of the base material layer, and the heat-resistant layer faces at least the positive electrode, and a thickness T1 of the base material layer and a thickness T2 of the heat-resistant layer satisfy a relationship of T2/T1 ≥ 0.2. 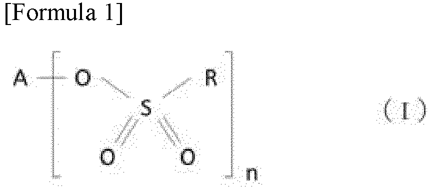 (In the formula, A is a group I element or a group II element, R is a hydrocarbon group, and n is 1 or 2.)

The non-aqueous electrolyte secondary battery according to the present disclosure has high capacity and excellent high-temperature storage characteristics.

### BRIEF DESCRIPTION OF DRAWINGS

FIG. 1 is a sectional view of a non-aqueous electrolyte secondary battery of an example of an embodiment.
FIG. 2 is a view illustrating an example of a cross section of a separator.

### DESCRIPTION OF EMBODIMENTS

Even when the lithium titanate described in Patent Literature 1 is used for the positive electrode, the reaction potential is low and the battery capacity deteriorates. The present inventors have made investigation to consequently find that the non-aqueous electrolyte secondary battery having high capacity and low resistance may be achieved by presence of the sulfonate compound represented by the formula (I) on particle surfaces of a lithium-containing composite oxide used as a positive electrode active material. This is presumably because the sulfonate compound can function to reduce reaction resistance of the positive electrode and increase charge-discharge depth. However, the increased charge-discharge depth by reducing the reaction resistance causes a new problem of deterioration of high-temperature storage characteristics. This deterioration of high-temperature storage characteristics is considered to be mainly caused by increasing the charge-discharge depth to increase an amount of eluted metals, such as Ni, contained in the lithium-containing composite oxide.

Accordingly, the present inventors have successfully improved the high-temperature storage characteristics while keeping high capacity by using a lithium-containing composite oxide having a specific sulfonate compound adhering to particle surfaces as the positive electrode active material and by using a separator having a heat-resistant layer with a predetermined thickness. According to the non-aqueous electrolyte secondary battery of the present disclosure, the elution of metals such as Ni is inhibited even with the increased charge-discharge depth of the positive electrode, and therefore it is considered that the high-temperature storage characteristics are improved.

The sulfonate compound represented by the formula (I) specifically functions to reduce reaction resistance of the positive electrode when applied for the particle surfaces of the lithium-containing composite oxide, and to increase the charge-discharge depth of the positive electrode. However, only applying the sulfonate compound for the positive electrode cannot achieve the battery having high capacity and excellent high-temperature storage characteristics. As a result of investigation by the present inventors, it has been found to be important for achieving such a battery that the separator having the heat-resistant layer with a predetermined thickness is used, as noted above.

Specifically, with a separator having a base material layer having a thickness of T1 and a heat-resistant layer having a thickness of T2, it has been found that a case of T2/T1 ≥ 0.2 specifically improves the high-temperature storage characteristics compared with a case of T2/T1 < 0.2 (see Examples described later).

Hereinafter, an example of embodiments of the non-aqueous electrolyte secondary battery according to the present disclosure will be described in detail with reference to the drawings. The scope of the present disclosure includes configurations composed of selective combinations of constitutional elements of a plurality of embodiments and modified examples described below. The expression "to" herein means a range including an upper limit and a lower limit of before and after "to".

Hereinafter, a cylindrical battery in which a wound electrode assembly 14 is housed in a bottomed cylindrical exterior housing can 16 will be exemplified as the non-aqueous electrolyte secondary battery, but the exterior of the battery is not limited to the cylindrical exterior housing can. The non-aqueous electrolyte secondary battery according to the present disclosure may be, for example, a rectangular battery comprising a rectangular exterior housing can, a coin battery comprising a coin-shaped exterior housing can, or a pouch battery comprising an exterior constituted with laminated sheets including a metal layer and a resin layer. The electrode assembly is not limited to a wound electrode assembly, and may be a stacked electrode assembly in which a plurality of positive electrodes and a plurality of negative electrodes are alternately stacked via a separator.

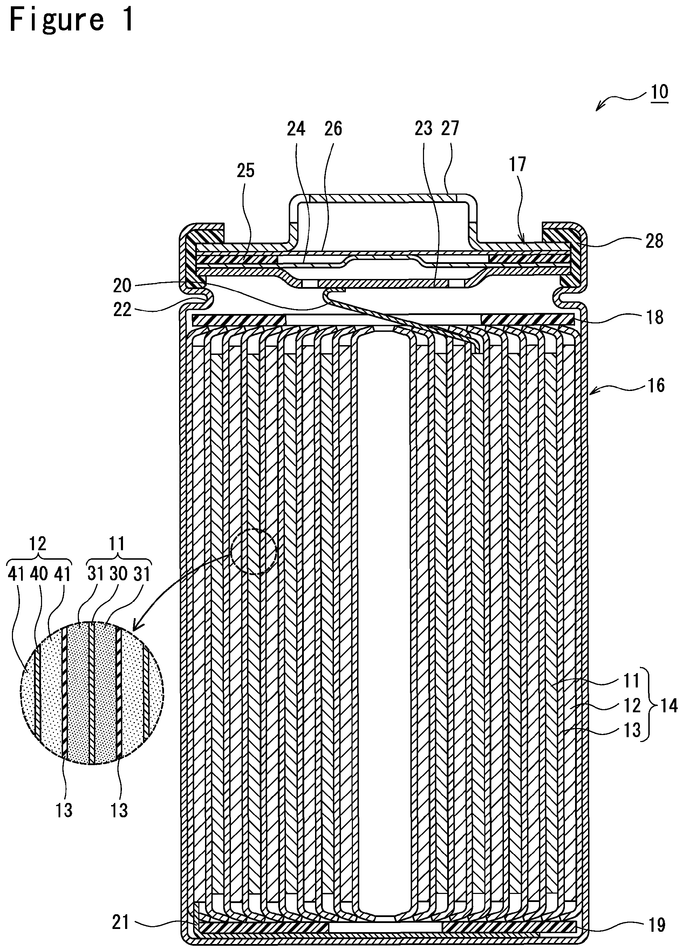

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one end side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as LiPF₆ is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 8 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side surface portion thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the electrode assembly 14, specifically a positive electrode active material constituting the positive electrode 11 and the separator 13, will be described in detail.

### [Positive Electrode]

The positive electrode 11 has a positive electrode core 30 and a positive electrode mixture layer 31 provided on a surface of the positive electrode core 30. For the positive electrode core 30, a foil of a metal stable within a potential range of the positive electrode 11, such as aluminum, a film in which such a metal is disposed on a surface thereof, and the like may be used. The positive electrode mixture layer 31 includes a positive electrode active material, a conductive agent, and a binder, and is preferably provided on both surfaces of the positive electrode core 30 except for a portion where the positive electrode lead 20 is to be connected. The positive electrode 11 may be produced by, for example, applying a positive electrode mixture slurry including the positive electrode active material, the conductive agent, and the binder on the surface of the positive electrode core 30, and drying and subsequently compressing the coating film to form the positive electrode mixture layer 31 on both the surfaces of the positive electrode core 30.

Examples of the conductive agent included in the positive electrode mixture layer 31 include carbon materials such as carbon black such as acetylene black and Ketjenblack, graphite, carbon nanotube (CNT), carbon nanofiber, and graphene. Examples of the binder included in the positive electrode mixture layer 31 include fluorine-containing resins such as polytetrafluoroethylene (PTFE) and polyvinylidene fluoride (PVDF), polyacrylonitrile (PAN), a polyimide, an acrylic resin, and a polyolefin. These resins may be used in combination with carboxymethylcellulose (CMC) or a salt thereof, polyethylene oxide, and the like. Content rates of the conductive agent and the binder are each greater than or equal to 0.1 mass% and less than or equal to 5 mass% relative to a mass of the positive electrode mixture layer 31, for example.

The positive electrode 11 includes a lithium-containing composite oxide and a sulfonate compound present on particle surfaces of the composite oxide. The lithium-containing composite oxide having the sulfonate compound adhering to the particle surfaces functions as the positive electrode active material. The sulfonate compound is a compound represented by the formula (I).

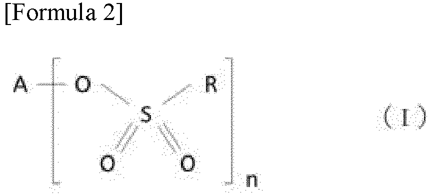

In the formula, A is a group I element or a group II element, R is a hydrocarbon group, and n is 1 or 2.

The sulfonate compound represented by the formula (I) (hereinafter, which may be simply referred to as "sulfonate compound") specifically functions to reduce the reaction resistance of the positive electrode 11 when applied for the particle surfaces of the lithium-containing composite oxide, and to improve output characteristics of the battery. In addition, the reduction in resistance can increase the charge-discharge depth to achieve increase in the capacity. Although the sulfonate compound exhibits the effect with an extremely small amount, the amount of the sulfonate compound present on the surface of the lithium-containing composite oxide is preferably greater than or equal to 0.01 mass%, more preferably greater than or equal to 0.05 mass%, and particularly preferably greater than or equal to 0.1 mass% relative to a mass of the lithium-containing composite oxide.

The amount of the sulfonate compound present on the surface of the lithium-containing composite oxide is preferably less than or equal to 2 mass%, more preferably less than or equal to 1.5 mass%, and particularly preferably less than or equal to 1.0 mass% relative to the mass of the lithium-containing composite oxide from the viewpoint of increasing the capacity.

The positive electrode active material mainly contains the composite particles that are the lithium-containing composite oxide having the sulfonate compound adhering to the particle surfaces, and may be constituted with substantially only the composite particles. Note that the positive electrode active material may include a composite oxide other than the composite particles, or another compound within a range not impairing the object of the present disclosure. For example, a composite oxide having no sulfonate compound adhering to the particle surfaces may be included as a part of the positive electrode active material.

The lithium-containing composite oxide preferably has a layered rock-salt structure. When the sulfonate compound is applied for the composite oxide having the layered rock-salt structure, the above effect becomes more remarkable. Examples of the layered rock-salt structure of the lithium-containing composite oxide include a layered rock-salt structure belonging to the space group R-3m and a layered rock-salt structure belonging to the space group C2/m. Among these, the layered rock-salt structure belonging to the space group R-3m is preferable from the viewpoints of increase in the capacity and stability of the crystal structure. The layered rock-salt structure of the lithium-containing composite oxide includes a transition metal layer, a Li layer, and an oxygen layer.

The lithium-containing composite oxide is a composite oxide containing metal elements such as Ni, Co, Al, and Mn in addition to Li. The metal element constituting the lithium-containing composite oxide is, for example, Ni, Co, and M (M is at least one element selected from the group consisting of Al, Mn, Fe, Ti, Si, Nb, Mo, W, and Zn). Among these, at least one selected from the group consisting of Ni, Co, Al, and Mn is preferably contained. An example of the preferable composite oxide includes a composite oxide containing Ni, Co, and Al, and a composite oxide containing Ni, Co, and Mn.

The lithium-containing composite oxide preferably contains greater than or equal to 80 mol% of Ni relative to a total number of moles of metal elements excluding Li from the viewpoints of increasing the capacity, and the like. The effect by adding the sulfonate compound is more remarkable when the lithium-containing composite oxide having a higher Ni content rate is used. The content rate of Ni may be greater than or equal to 87 mol%, or may be greater than or equal to 90 mol% relative to the total number of moles of the metal elements excluding Li. An upper limit of the Ni content rate is, for example, 95 mol%.

An example of the preferable lithium-containing composite oxide is the composite oxide containing Ni, Co, and M, as noted above. A content rate of Co is, for example, greater than or equal to 0 mol% and less than or equal to 20 mol% relative to the total number of moles of metal elements excluding Li. A content rate of M is, for example, greater than or equal to 0 mol% and less than or equal to 20 mol% relative to the total number of moles of metal elements excluding Li. Co may not be added substantially, but adding a small amount of Co improves the battery performance. M preferably includes at least one of Mn and Al.

The lithium-containing composite oxide is, for example, a composite oxide represented by the general formula LiₐNiₓCo_{y}M_{z}O_{2-b}, wherein 0.95 ≤ a ≤ 1.2, 0.80 ≤ x ≤ 0.95, 0 ≤ y ≤ 0.20, 0 ≤ z ≤ 0.20, 0 ≤ b ≤ 0.05, x+y+z = 1, and M is at least one element selected from the group consisting of Al, Mn, Fe, Ti, Si, Nb, Mo, W, and Zn. In the general formula, "x" preferably satisfies 0.87 ≤ x ≤ 0.95.

The content rates of the elements constituting the lithium-containing composite oxide may be measured with an inductively coupled plasma atomic emission spectrometer (ICP-AES), an electron probe micro analyzer (EPMA), an energy dispersive X-ray analyzer (EDX), and the like.

The lithium-containing composite oxide is of, for example, secondary particles each formed by aggregation of a plurality of primary particles. A volume-based median diameter (D50) of the composite oxide is not particularly limited, and an example thereof is greater than or equal to 3 µm and less than or equal to 30 µm, and preferably greater than or equal to 5 µm and less than or equal to 25 µm. When the composite oxide is of the secondary particles each formed by aggregation of the primary particles, the D50 of the composite oxide means D50 of the secondary particles. The D50 means a particle diameter at which a cumulative frequency is 50% from a smaller particle diameter side in volume-based particle size distribution. The particle size distribution of the composite oxide (the same applies to a case of the negative electrode active material) may be measured by using a laser diffraction-type particle size distribution measuring device (for example, MT3000II, manufactured by MicrotracBEL Corp.) with water as a dispersion medium.

An average particle diameter of the primary particles constituting the lithium-containing composite oxide is, for example, greater than or equal to 0.05 µm and less than or equal to 1 µm. The average particle diameter of the primary particles is calculated by averaging diameters of circumscribed circles in the primary particles extracted by analyzing a scanning electron microscope (SEM) image of a cross section of the secondary particles.

The sulfonate compound present on the particle surfaces of the lithium-containing composite oxide is the compound represented by the formula (I), as noted above.

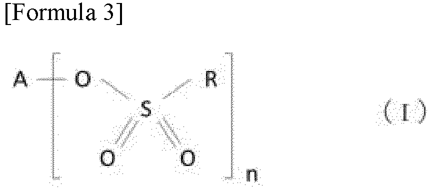

In the formula, A is a group I element or a group II element, R is a hydrocarbon group, and n is 1 or 2. A preferably is a group I element. Among these, Li or Na is more preferable, and Li is particularly preferable.

In the formula (I), R preferably is an alkyl group. The number of carbon atoms in the alkyl group is preferably less than or equal to 5, and more preferably less than or equal to 3. From the viewpoints of reduction in the reaction resistance and the like, a preferable example of R is an alkyl group having less than or equal to 3 carbon atoms, and specifically preferably a methyl group. In R, some of hydrogen bonded to carbon may be replaced with fluorine. In the formula (I), n preferably is 1.

Specific examples of the sulfonate compound include lithium methanesulfonate, lithium ethanesulfonate, lithium propanesulfonate, sodium methanesulfonate, sodium ethanesulfonate, magnesium methanesulfonate, and lithium fluoromethanesulfonate. Among these, at least one selected from the group consisting of lithium methanesulfonate, lithium ethanesulfonate, and sodium methanesulfonate are preferable, and lithium methanesulfonate is particularly preferable.

The sulfonate compound is uniformly present on the entire particle surfaces of the lithium-containing composite oxide, for example. The presence of the sulfonate compound on the particle surfaces of the composite oxide may be confirmed by Fourier transform infrared spectrometry (FT-IR). In an infrared absorption spectrum obtained by FT-IR, the positive electrode active material including lithium methanesulfonate has absorption peaks near 1238 cm⁻¹, 1175 cm⁻¹, 1065 cm⁻¹, and 785 cm⁻¹, for example. The peaks near 1238 cm⁻¹, 1175 cm⁻¹, and 1065 cm⁻¹ are peaks attributed to SO stretching vibration derived from lithium methanesulfonate. The peak near 785 cm⁻¹ is a peak attributed to CS stretching vibration derived from lithium methanesulfonate.

Also, in the positive electrode active material including a sulfonate compound other than lithium methanesulfonate, the presence of the sulfonate compound may be confirmed from absorption peaks of the infrared absorption spectrum derived from the sulfonate compound. The presence of the sulfonate compound on the particle surfaces of the lithium-containing composite oxide may also be confirmed by ICP, atomic absorption spectrometry, X-ray photoelectron spectrometry (XPS), synchrotron XRD measurement, TOF-SIMS, or the like.

The positive electrode active material, which is an example of an embodiment, may be manufactured by the following method. The manufacturing method described here is an example, and the method for manufacturing the positive electrode active material is not limited to this method.

First, a metal oxide containing a metal element such as Ni, Co, Al, and Mn is synthesized. Then, this metal oxide and a lithium compound are mixed and calcined to obtain the lithium-containing composite oxide. The metal oxide may be synthesized by, for example, while stirring a solution of metal salts including Ni, Co, Al, and Mn, adding a solution of an alkali such as sodium hydroxide dropwise to adjust a pH on the alkaline side (for example, greater than or equal to 8.5 and less than or equal to 12.5) to precipitate (coprecipitate) a composite hydroxide including the metal elements such as Ni, Co, Al, and Mn, and thermally treating this composite hydroxide. The thermal treatment temperature is not particularly limited, and may be greater than or equal to 300°C and less than or equal to 600°C as an example.

Examples of the lithium compound include Li₂CO₃, LiOH, Li₂O₂, Li₂O, LiNO₃, LiNO₂, Li₂SO₄, LiOH·H₂O, LiH, and LiF. The metal oxide and the lithium compound are mixed so that a mole ratio between the metal elements in the metal oxide and Li in the lithium compound is, for example, greater than or equal to 1:0.98 and less than or equal to 1:1.1. When the metal oxide and the lithium compound are mixed, another metal raw material may be added as necessary.

The mixture of the metal oxide and the lithium compound is calcined under an oxygen atmosphere, for example. The mixture may be calcined via a plurality of temperature-raising processes. The calcining step includes, for example: a first temperature-raising step of raising a temperature at a temperature-raising rate of greater than or equal to 1.0 °C/min and less than or equal to 5.5 °C/min to greater than or equal to 450°C and less than or equal to 680°C; and a second temperature-raising step of raising a temperature at a temperature-raising rate of greater than or equal to 0.1 °C/min and less than or equal to 3.5 °C/min to greater than 680°C. The highest reaching temperature in the calcining step may be set at greater than or equal to 700°C and less than or equal to 850°C, and this temperature may be held for greater than or equal to 1 hour and less than or equal to 10 hours.

Then, the calcined product (lithium-containing composite oxide) is washed with water and dehydrated to obtain a cake-like composition. This washing step removes the remained alkali component. The washing with water and the dehydration may be performed by conventionally known methods. Thereafter, the cake-like composition is dried to obtain a powdery composition. The drying step may be performed under a vacuum atmosphere. An example of the drying conditions is at a temperature of greater than or equal to 150°C and less than or equal to 400°C for greater than or equal to 0.5 hours and less than or equal to 15 hours.

The sulfonate compound is added into the cake-like composition obtained in the washing step or the powdery composition obtained in the drying step, for example. In this case, a sulfonic acid solution may be added instead of the sulfonate compound or together with the sulfonate compound. This yields the positive electrode active material having the sulfonate compound adhering to the particle surfaces of the lithium-containing composite oxide. The sulfonate compound may be added as an aqueous dispersion. The sulfonic acid solution is preferably an aqueous solution of a sulfonic acid. A concentration of the sulfonic acid in the sulfonic acid solution is, for example, greater than or equal to 0.5 mass% and less than or equal to 40 mass%.

Since the lithium compound remains in the cake-like composition at a certain degree, adding the sulfonic acid solution into the cake-like composition allows Li dissolved in water in the cake to react with the sulfonic acid to obtain the lithium sulfonate. Note that a substantially whole amount of the added sulfonate compound remains on the surface of the lithium-containing composite oxide.

### [Negative Electrode]

The negative electrode 12 has a negative electrode core 40 and a negative electrode mixture layer 41 provided on a surface of the negative electrode core 40. For the negative electrode core 40, a foil of a metal stable within a potential range of the negative electrode 12, such as copper, a film in which such a metal is disposed on a surface thereof, and the like may be used. The negative electrode mixture layer 41 includes a negative electrode active material and a binder, and is preferably provided on both surfaces of the negative electrode core 40 except for a portion where the negative electrode lead 21 is to be connected. The negative electrode 12 may be produced by, for example, applying a negative electrode mixture slurry including the negative electrode active material and the binder on the surface of the negative electrode core 40, and drying and subsequently compressing the coating film to form the negative electrode mixture layer 41 on both the surfaces of the negative electrode core 40.

The negative electrode active material included in the negative electrode mixture layer 41 is not particularly limited as long as it may reversibly occlude and release lithium ions, and a carbon material such as graphite is commonly used. The graphite may be any of natural graphite such as flake graphite, massive graphite, and amorphous graphite, and artificial graphite such as massive artificial graphite and graphitized mesophase carbon microbead.

For the negative electrode active material, the carbon material such as graphite and a silicon material are used in combination, for example. The negative electrode active material contains the silicon material at, for example, greater than or equal to 1 mass% relative to a total mass of the negative electrode active material. This may more increase the capacity of the battery. Since the silicon material has a large proportion of expansion during charge, the positive electrode 11 and the separator 13 become close to easily oxidize the separator 13. Thus, when the negative electrode contains the silicon material, an effect of a heat-resistant layer 51 of the separator 13, described later, is remarkably exhibited. An upper limit of the content of the silicon material is, for example, 20 mass% relative to the total mass of the negative electrode active material. Examples of the silicon material include: Si; an alloy including Si; a silicon oxide represented by SiOₓ (x is greater than or equal to 0.5 and less than or equal to 1.6); a silicon-containing material in which Si fine particles are dispersed in a lithium silicate phase represented by Li_{2y}SiO_{(2+y)} (0 < y < 2); and a silicon-containing material in which Si fine particles are dispersed in a carbon phase.

Examples of the binder included in the negative electrode mixture layer include styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). These may be used singly, or may be used in combination of greater than or equal to two thereof.

### [Separator]

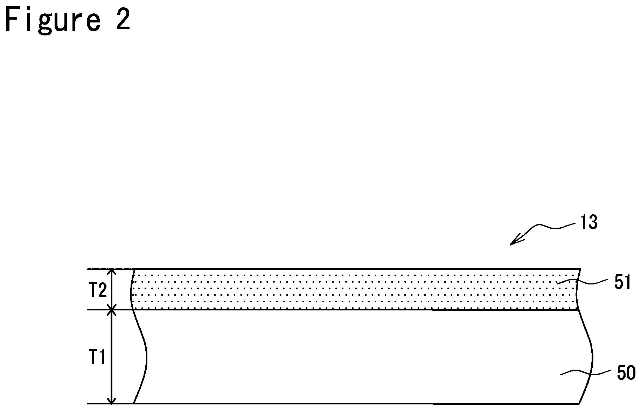

The separator 13 separates the positive electrode 11 and the negative electrode 12 from each other. The separator 13 has a base material layer and a heat-resistant layer formed on a surface of the base material layer. FIG. 2 is a sectional view of the separator 13 of an example of an embodiment. In the example illustrated in FIG. 2, the separator 13 has a base material layer 50 and the heat-resistant layer 51 formed on one surface of the base material layer 50, the positive electrode 11 is disposed on the upper side of the separator 13, and the negative electrode 12 is disposed on the lower side. That is, in the electrode assembly 14, the heat-resistant layer 51 faces the positive electrode 11, and the base material layer 50 faces the negative electrode 12. Note that the separator 13 is not limited to the example illustrated in FIG. 2, and may have the heat-resistant layer 51 on both the surfaces of the base material layer 50. In this case, the heat-resistant layer 51 faces both the positive electrode 11 and the negative electrode 12. The heat-resistant layer 51 is formed on a substantially entire region of one surface of the base material layer 50, for example.

A thickness T1 of the base material layer 50 and a thickness T2 of the heat-resistant layer 51 satisfy a relationship of T2/T1 ≥ 0.2. This inhibits elution of metals such as Ni from the positive electrode 11 to improve the high-temperature storage characteristics. In a case of T2/T1 < 0.2, the effect of the heat-resistant layer 51, described later, is not exhibited, and the high-temperature storage characteristics are not sufficiently improved. An upper limit of T2/T1 is, for example, 0.5. T1 is, for example, greater than or equal to 5 µm and less than or equal to 50 µm, and the thickness T2 is, for example, greater than or equal to 1 µm and less than or equal to 10 µm.

For the base material layer 50, a porous sheet having an ion permeation property and an insulation property is used, for example. Specific examples of the porous sheet include a microporous thin film, a woven fabric, and a nonwoven fabric. Examples of a material for the base material layer 50 include a polyolefin such as polyethylene, polypropylene, and a copolymer of ethylene and an α-olefin, an acrylic resin, polystyrene, polyester, and cellulose.

The heat-resistant layer 51 may include a ceramic-containing polymer containing a ceramic and a polymer, and may include a polymer having an amide bond. The ceramic-containing polymer improves the heat resistance due to containing a ceramic. The polymer having an amide bond has excellent heat resistance. Setting the heat-resistant layer 51 to face the positive electrode 11 may inhibit oxidation of the separator 13 to specifically improve the high-temperature storage characteristics. In addition, providing the heat-resistant layer 51 may retain the shape of the separator 13 in a case of abnormal heat generation of the battery to inhibit occurrence of internal short circuit. Although the heat-resistant layer 51 may include a polymer other than the ceramic-containing polymer and the polymer having an amide bond within a range not impairing the object of the present disclosure, the heat-resistant layer 51 is preferably composed of only these polymers.

Examples of the ceramic constituting the ceramic-containing polymer include metal oxide particles, metal nitride particles, metal fluoride particles, and metal carbide particles. Examples of the metal oxide particles include aluminum oxide (alumina), titanium oxide (titania), magnesium oxide, zirconium oxide, nickel oxide, silicon oxide (silica), and manganese oxide. Examples of the metal nitride particles include titanium nitride, boron nitride, aluminum nitride, magnesium nitride, and silicon nitride. Examples of the metal fluoride particles include aluminum fluoride, lithium fluoride, sodium fluoride, magnesium fluoride, calcium fluoride, and barium fluoride. Examples of the metal carbide particles include silicon carbide, boron carbide, titanium carbide, and tungsten carbide. The inorganic particles 32 may be a porous aluminosilicate salt such as zeolite (M_{2/n}O·Al₂O₃·xSiO₂·yH₂O, wherein M is a metal element, n is a valency of M, x ≥ 2, and y ≥ 0), a layered silicate salt such as talc (Mg₃Si₄O₁₀(OH)₂), minerals such as barium titanate (BaTiO₃) and strontium titanate (SrTiO₃), and the like. These may be used singly, or in combination of greater than or equal to two thereof.

The ceramic constituting the ceramic-containing polymer preferably includes at least one selected from the group consisting of alumina, silica, and titania.

A content rate of the ceramic in the heat-resistant layer 51 is preferably greater than or equal to 20 mass% and less than or equal to 95 mass%, and more preferably greater than or equal to 30 mass% and less than or equal to 70 mass% relative to the total mass of the heat-resistant layer 51. This improves permeability of the non-aqueous electrolyte.

The polymer constituting the ceramic-containing polymer has a function of adhering the ceramic particles each other and adhering the ceramic and the base material layer 50. Examples of the polymer include a fluorine resin such as polyvinylidene fluoride (PVDF) and polytetrafluoroethylene (PTFE), a polyimide resin, a polyamide resin, an acrylic resin, a polyolefin resin, styrene-butadiene rubber (SBR), nitrile-butadiene rubber (NBR), carboxymethylcellulose (CMC) or a salt thereof, polyacrylic acid (PAA) or a salt thereof, and polyvinyl alcohol (PVA). These may be used singly, or in combination of greater than or equal to two thereof.

The polymer having an amide bond included in the heat-resistant layer 51 is, for example, a mixture of a para-aramid resin and a meta-aramid resin, or a copolymer containing a para-aramid skeleton and a meta-aramid skeleton. When the polymer having an amide bond is the mixture of a para-aramid resin and a meta-aramid resin, a mass ratio between the para-aramid resin and the meta-aramid resin constituting the polymer having an amide bond is preferably greater than or equal to 40:60 and less than or equal to 90: 10, and more preferably greater than or equal to 50:50 and less than or equal to 75:25. When the polymer having an amide bond is the copolymer containing the para-aramid skeleton and the meta-aramid skeleton, the mass ratio between the para-aramid skeleton and the meta-aramid skeleton constituting the polymer having an amide bond is preferably greater than or equal to 40:60 and less than or equal to 90:10, and more preferably greater than or equal to 50:50 and less than or equal to 75:25. When the heat-resistant layer 51 contains the polymer having an amide bond, the heat-resistant layer 51 may further contain the above ceramic.

The heat-resistant layer 51 may be formed by applying a solution of the ceramic-containing polymer or a solution of the polymer having an amide bond on the surface of the base material layer 50. Examples of a method for applying the polymer solution (film-forming method) include die extrusion, bar coating, and a dip method. After the resin solution is applied on the surface of the base material layer 50, the coating film may be dried to remove the solvent, or the base material layer 50 may be immersed in a coagulation vessel to remove the solvent. For the coagulation vessel, the solvent used for the resin solution, water, which is inert to the solvent and has compatibility, and the like may be used.

### EXAMPLES

Hereinafter, the present disclosure will be further described with Examples, but the present disclosure is not limited to these Examples.

### <Example 1>

### [Production of Positive Electrode Active Material]

A composite hydroxide represented by [Ni_{0.90}Al_{0.05}Mn_{0.05}](OH)₂ obtained by a coprecipitation method was calcined at 500°C for 8 hours to obtain an oxide (Ni_{0.90}Al_{0.05}Mn_{0.05}O₂). Then, LiOH and the composite oxide were mixed so that a mole ratio between Li and a total amount of Ni, Al, and Mn was 1.03:1 to obtain a mixture. This mixture was calcined under an oxygen flow with an oxygen concentration of 95% (a flow rate of 2 mL/min per 10 cm³ and 5 L/min per kilogram of the mixture) at a temperature-raising rate of 2.0 °C/min from room temperature to 650°C, and then calcined at a temperature-raising rate of 0.5 °C/min from 650°C to 780°C to obtain a lithium-containing composite oxide.

Into the obtained lithium-containing composite oxide, water was added so that a slurry concentration was 1500 g/L, and the slurry was stirred for 15 minutes and filtered to obtain a cake-like composition. Into this cake-like composition, powdery lithium methanesulfonate was added. An amount of the added lithium methanesulfonate was 0.1 mass% relative to the total mass of the lithium-containing composite oxide. After lithium methanesulfonate was added, the mixture was dried under a vacuum atmosphere and a condition at 180°C for 2 hours to obtain a positive electrode active material. By Fourier transform infrared spectrometry (FT-IR), the presence of lithium methanesulfonate on the particle surfaces of the composite oxide was confirmed.

### [Production of Positive Electrode]

The positive electrode active material, acetylene black, and polyvinylidene fluoride were mixed at a mass ratio of 98:1:1, and N-methyl-2-pyrrolidone (NMP) was used as a dispersion medium to prepare a positive electrode mixture slurry. Then, the positive electrode mixture slurry was applied on a positive electrode core composed of aluminum foil, the coating film was dried and compressed, and then the positive electrode core was cut to a predetermined electrode size to produce a positive electrode in which a positive electrode mixture layer was formed on both surfaces of the positive electrode core. At a part of the positive electrode, an exposed portion where the surface of the positive electrode core was exposed was provided.

### [Production of Negative Electrode]

As a negative electrode active material, a mixture of 99 parts by mass of artificial graphite and 1 part by mass of silicon oxide (SiO) was used. Mixing 100 parts by mass of this mixture, 1 part by mass of carboxymethylcellulose (CMC), and 1 part by mass of styrene-butadiene rubber (SBR) was performed, and an appropriate amount of water was added to prepare a negative electrode mixture slurry. Then, the negative electrode mixture slurry was applied on a negative electrode core composed of copper foil, the coating film was dried and compressed, and then the negative electrode core was cut to a predetermined electrode size to produce a negative electrode in which a negative electrode mixture layer was formed on both the surfaces of the negative electrode core. At a part of the negative electrode, an exposed portion where the surface of the negative electrode core was exposed was provided.

### [Production of Separator]

Paraphenylenediamine and terephthaloyl dichloride, which were raw materials, were subjected to a polycondensation reaction in NMP to prepare a solution of a para-aramid resin at a solid-content concentration of 3 mass%. In addition, powder of polymetaphenylene isophthalamide (Conex, manufactured by TEIJIN LIMITED) was used as a meta-aramid resin, 10 parts by mass of this powder was dissolved in 90 parts by mass of NMP to prepare a solution of the meta-aramid resin. The resin solutions were mixed so that a mass ratio between the para-aramid resin and the meta-aramid resin was 40:60 to prepare a coating liquid for a heat-resistant layer. This coating liquid was applied on one surface of a porous base material (thickness: 10 µm) made of polyethylene, and immersed in ion-exchanged water to be coagulated. Thereafter, washing with flowing ion-exchanged water and drying to remove the water content afforded a separator. A ratio (T2/T1) of a thickness T2 of the heat-resistant layer to a thickness T1 of the base material layer was 0.4.

### [Preparation of Non-Aqueous Electrolyte]

Into a mixed solvent in which ethylene carbonate (EC), ethyl methyl carbonate (EMC), and dimethyl carbonate (DMC) were mixed at a volume ratio (25°C) of 3:3:4, LiPF₆ was dissolved at a concentration of 1.2 mol/L to prepare a non-aqueous electrolyte.

### [Production of Test Cell (Secondary Battery)]

An aluminum lead was attached to the exposed portion of the positive electrode, and a nickel lead was attached to the exposed portion of the negative electrode. The positive electrode and the negative electrode were spirally wound via the separator to produce a wound electrode assembly. In this time, the heat-resistant layer of the separator was set to face the positive electrode. An insulating plate was each disposed on the upper and lower parts of the electrode assembly, and the electrode assembly was housed in an exterior housing can. The negative electrode lead was welded to a bottom of the bottomed cylindrical exterior housing can, and the positive electrode lead was welded to a sealing assembly. The electrolyte liquid was injected into the exterior housing can, and an opening of the exterior housing can was sealed with the sealing assembly via a gasket to produce a secondary battery as a test cell.

### [Evaluation of Capacity Retention after High-Temperature Storage]

Under an environment at 25°C, the above test cell was charged at a constant current of 0.3 C until a battery voltage reached 4.2 V, and then charged at a constant voltage of 4.2 V until a current value reached 0.02 C. Thereafter, the test cell was discharged at a constant current of 0.5 C until the battery voltage reached 2.5 V. A discharge capacity in this time was specified as an initial discharge capacity.

Under an environment at 25°C, this test cell was charged at a constant current of 0.3 C until the battery voltage reached 4.2 V, and then charged at a constant voltage of 4.2 V until a current value reached 0.02 C. Further, the test cell was left to stand under an environment at 60°C for two months and then left to stand under an environment at 25°C for 12 hours, and then discharged at a constant current of 0.5 C until the battery voltage reached 2.5 V. Thereafter, under an environment at 25°C, the test cell was charged at a constant current of 0.3 C until the battery voltage reached 4.2 V, and then charged at a constant voltage of 4.2 V until the current value reached 0.02 C. Further, the test cell was discharged at a constant current of 0.5 C until the battery voltage reached 2.5 V. A discharge capacity in this time was specified as a discharge capacity after storage. From the initial discharge capacity and the discharge capacity after storage, capacity retention after high-temperature storage was determined with the following formula. Capacity retention after high-temperature storage (%) = (Discharge capacity after storage - Initial discharge capacity)/Initial discharge capacity × 100

### <Example 2>

A test cell was produced and evaluated in the same manner as in Example 1 except that, in the production of the positive electrode active material, the amount of the added lithium methanesulfonate relative to the total mass of the lithium-containing composite oxide was 0.3 mass%.

### <Example 3>

A test cell was produced and evaluated in the same manner as in Example 1 except that: in the production of the positive electrode active material, the amount of the added lithium methanesulfonate relative to the total mass of the lithium-containing composite oxide was 0.5 mass%; and in the production of the separator, the amount of the applied coating liquid was regulated to produce a separator with T2/T1 of 0.22.

### <Example 4>

A test cell was produced and evaluated in the same manner as in Example 1 except that, in the production of the positive electrode active material, the amount of the added lithium methanesulfonate relative to the total mass of the lithium-containing composite oxide was 0.5 mass%.

### <Example 5>

A test cell was produced and evaluated in the same manner as in Example 1 except that: in the production of the positive electrode active material, the amount of the added lithium methanesulfonate relative to the total mass of the lithium-containing composite oxide was 0.5 mass%; and in the production of the separator, the amount of the applied coating liquid was regulated to produce a separator with T2/T1 of 0.5.

### <Example 6>

A test cell was produced and evaluated in the same manner as in Example 1 except that: in the production of the positive electrode active material, the amount of the added lithium methanesulfonate relative to the total mass of the lithium-containing composite oxide was 0.5 mass%; and in the production of the separator, the following points were changed.
(1) Dispersing 5 parts by mass of polyvinyl alcohol (PVA) and 5 parts by mass of alumina was performed in 90 parts by mass of NMP to produce a coating liquid.
(2) This coating liquid was applied on one surface of a porous base material (thickness: 10 µm) made of polyethylene, and the coating film was dried to form a heat-resistant layer. A ratio (T2/T1) of a thickness T2 of the heat-resistant layer to a thickness T1 of the base material layer was 0.4.

### <Example 7>

A test cell was produced and evaluated in the same manner as in Example 1 except that, in the production of the positive electrode active material, the amount of the added lithium methanesulfonate relative to the total mass of the lithium-containing composite oxide was 1 mass%.

### <Example 8>

A test cell was produced and evaluated in the same manner as in Example 1 except that, in the production of the positive electrode active material, sodium methanesulfonate was used instead of lithium methanesulfonate, and the amount of the added sodium methanesulfonate relative to the total mass of the lithium-containing composite oxide was 0.5 mass%.

### <Example 9>

A test cell was produced and evaluated in the same manner as in Example 1 except that, in the production of the positive electrode active material, lithium ethanesulfonate was used instead of lithium methanesulfonate, and the amount of the added lithium ethanesulfonate relative to the total mass of the lithium-containing composite oxide was 0.5 mass%.

### <Comparative Example 1>

A test cell was produced and evaluated in the same manner as in Example 1 except that: in the production of the positive electrode active material, lithium methanesulfonate was not added; and in the production of the separator, the amount of the applied coating liquid was regulated to produce a separator with T2/T1 of 0.22.

### <Comparative Example 2>

A test cell was produced and evaluated in the same manner as in Example 1 except that: in the production of the positive electrode active material, lithium methanesulfonate was not added; and in the production of the separator, the amount of the applied coating liquid was regulated to produce a separator with T2/T1 of 0.4.

### <Comparative Example 3>

A test cell was produced and evaluated in the same manner as in Example 1 except that: in the production of the positive electrode active material, lithium methanesulfonate was not added; and in the production of the separator, the amount of the applied coating liquid was regulated to produce a separator with T2/T1 of 0.5.

### <Comparative Example 4>

A test cell was produced and evaluated in the same manner as in Example 1 except that: in the production of the positive electrode active material, lithium methanesulfonate was not added; and in the production of the separator, the heat-resistant layer was not formed.

### <Comparative Example 5>

A test cell was produced and evaluated in the same manner as in Example 1 except that, in the production of the positive electrode active material, lithium succinate was added instead of methanesulfonic acid, and the amount of the added lithium succinate relative to the total mass of the lithium-containing composite oxide was 0.5 mass%.

### <Comparative Example 6>

A test cell was produced and evaluated in the same manner as in Example 1 except that, in the production of the positive electrode active material, lithium oxalate was added instead of methanesulfonic acid, and the amount of the added lithium oxalate relative to the total mass of the lithium-containing composite oxide was 0.5 mass%.

### <Comparative Example 7>

A test cell was produced and evaluated in the same manner as in Example 1 except that: in the production of the positive electrode active material, the amount of the added lithium methanesulfonate relative to the total mass of the lithium-containing composite oxide was 0.5 mass%; and in the production of the separator, the heat-resistant layer was not formed.

### <Comparative Example 8>

A test cell was produced and evaluated in the same manner as in Example 1 except that: in the production of the positive electrode active material, the amount of the added lithium methanesulfonate relative to the total mass of the lithium-containing composite oxide was 0.5 mass%; and in the production of the separator, 10 parts by mass of polyvinylidene fluoride (PVDF) powder was dissolved in 90 parts by mass of NMP to prepare a PVDF solution for use as a coating liquid for the heat-resistant layer.

### <Comparative Example 9>

A test cell was produced and evaluated in the same manner as in Example 1 except that: in the production of the positive electrode active material, lithium methanesulfonate was not added; and in the production of the separator, the amount of the applied coating liquid was regulated to produce a separator with T2/T1 of 0.14.

Table 1 shows the evaluation results of the test cells of Examples and Comparative Examples. The capacity retention after high-temperature storage of the test cells shown in Table 1 is values relative to the value of the test cell of Comparative Example 1 being 100. A larger value thereof means more excellent high-temperature storage characteristics.

**[Table 1]**

| | Details of implementation | | | | Evaluation result |
|---|---|---|---|---|---|
| | Positive electrode active material | | Separator | | Capacity retention after high-temperature storage |
| | Additive compound | Addition amount [mass%] | Polymer contained in heat -resistant layer | T2/T1 | |
| Example 1 | Li methanesulfonate | 0.1 | Aramid resin | 0.4 | 105 |
| Example 2 | Li methanesulfonate | 0.3 | Aramid resin | 0.4 | 106 |
| Example 3 | Li methanesulfonate | 0.5 | Aramid resin | 0.22 | 103 |
| Example 4 | Li methanesulfonate | 0.5 | Aramid resin | 0.4 | 108 |
| Example 5 | Li methanesulfonate | 0.5 | Aramid resin | 0.5 | 103 |
| Example 6 | Li methanesulfonate | 0.5 | Ceramic-containing resin | 0.4 | 109 |
| Example 7 | Li methanesulfonate | 1 | Aramid resin | 0.4 | 105 |
| Example 8 | Na methanesulfonate | 0.5 | Aramid resin | 0.4 | 105 |
| Example 9 | Li ethanesulfonate | 0.5 | Aramid resin | 0.4 | 104 |
| Comparative Example 1 | None | - | Aramid resin | 0.22 | 100 |
| Comparative Example 2 | None | - | Aramid resin | 0.4 | 100 |
| Comparative Example 3 | None | - | Aramid resin | 0.5 | 100 |
| Comparative Example 4 | None | - | No heat-resistant layer | - | 98 |
| Comparative Example 5 | Li succinate | 0.5 | Aramid resin | 0.4 | 100 |
| Comparative Example 6 | Li oxalate | 0.5 | Aramid resin | 0.4 | 100 |
| Comparative Example 7 | Li methanesulfonate | 0.5 | No heat-resistant layer | - | 99 |
| Comparative Example 8 | Li methanesulfonate | 0.5 | Vinylidene fluoride resin | 0.4 | 100 |
| Comparative Example 9 | Li methanesulfonate | 0.5 | Aramid resin | 0.14 | 100 |

As shown in Table 1, all the test cells of Examples exhibit excellent high-temperature storage characteristics compared with the test cells of Comparative Examples. From the results of the test cells of Examples 1, 2, 4, and 7, it is understood that the high-temperature storage characteristics are most improved with the amount of the added methanesulfonate compound of near 0.5 mass%. From the results of the test cells of Examples 3 to 5, it is understood that the high-temperature storage characteristics are most improved with T2/T1 of near 0.4. From the results of the test cells of Examples 4, 8, and 9, it is understood that lithium methanesulfonate is preferable as the sulfonate compound. From the results of the test cells of Examples 4 and 6, it is understood that the ceramic-containing polymer and the polymer having an amide bond as the heat-resistant layer have substantially equivalent high-temperature storage characteristics.

Meanwhile, the test cells of Comparative Examples 1 to 3, which did not apply the sulfonate compound for the positive electrode, exhibit poor high-temperature storage characteristics compared with the test cells of Examples 3 to 5. In addition, the test cell of Comparative Example 7, which used the separator without the heat-resistant layer, and the test cell of Comparative Example 8, which used the separator produced with the coating liquid not including the predetermined polymer, also exhibit poor high-temperature storage characteristics compared with the test cells of Examples 3 to 5. Particularly, the test cell of Comparative Example 4, which did not apply the sulfonate compound for the positive electrode and used the separator without the heat-resistant layer, exhibited further poorer high-temperature storage characteristics than Comparative Examples 1 to 3. The test cells of Comparative Examples 5 and 6, which used lithium succinate or lithium oxalate instead of the sulfonate compound, exhibited high-temperature storage characteristics equivalent to those of the test cell of Comparative Example 2, which added no acid salt to the positive electrode. The test cell of Comparative Example 9, which used the separator having the heat-resistant layer with T2/T1 of less than 0.2, exhibited high-temperature storage characteristics substantially equivalent to those of the test cell of Comparative Example 7, which used the separator without the heat-resistant layer.

From the above results, it is understood that the non-aqueous electrolyte secondary battery with improved high-temperature storage characteristics may be achieved by the specific synergistic effect exhibited when applying the specific sulfonate compound for the positive electrode and by using the predetermined separator.

The present disclosure will be further described with the following embodiments.

### Constitution 1:

A non-aqueous electrolyte secondary battery, comprising:
a positive electrode; a negative electrode; a separator that separates the positive electrode and the negative electrode from each other; and a non-aqueous electrolyte, wherein
the positive electrode includes a lithium-containing composite oxide and a sulfonate compound present on particle surfaces of the lithium-containing composite oxide,
the sulfonate compound is a compound represented by a formula (I),
the separator has a base material layer and a heat-resistant layer formed on a surface of the base material layer, and the heat-resistant layer faces the positive electrode, and
a thickness T1 of the base material layer and a thickness T2 of the heat-resistant layer satisfy a relationship of T2/T1 ≥ 0.2. 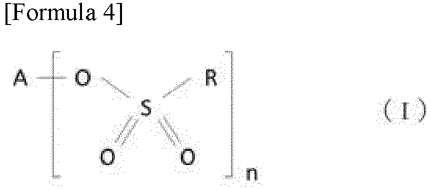 (In the formula, A is a group I element or a group II element, R is a hydrocarbon group, and n is 1 or 2.)

### Constitution 2:

The non-aqueous electrolyte secondary battery according to Constitution 1, wherein the A is the group I element.

### Constitution 3:

The non-aqueous electrolyte secondary battery according to Constitution 1, wherein the A is Li.

### Constitution 4:

The non-aqueous electrolyte secondary battery according to any one of Constitutions 1 to 3, wherein the R is an alkyl group.

### Constitution 5:

The non-aqueous electrolyte secondary battery according to any one of Constitutions 1 to 3, wherein the R is a methyl group.

### Constitution 6:

The non-aqueous electrolyte secondary battery according to any one of Constitutions 1 to 5, wherein an amount of the sulfonate compound present on a surface of the lithium-containing composite oxide is less than or equal to 2 mass% relative to a mass of the lithium-containing composite oxide.

### Constitution 7:

The non-aqueous electrolyte secondary battery according to any one of Constitutions 1 to 6, wherein the lithium-containing composite oxide has a layered rock-salt structure.

### Constitution 8:

The non-aqueous electrolyte secondary battery according to any one of Constitutions 1 to 7, wherein the heat-resistant layer includes a ceramic-containing polymer containing a ceramic and a polymer.

### Constitution 9:

The non-aqueous electrolyte secondary battery according to Constitution 8, wherein a content rate of the ceramic in the heat-resistant layer is greater than or equal to 20 mass% and less than or equal to 95 mass% relative to a total mass of the heat-resistant layer.

### Constitution 10:

The non-aqueous electrolyte secondary battery according to Constitution 8 or 9, wherein the ceramic includes at least one selected from the group consisting of alumina, silica, and titania.

### Constitution 11:

The non-aqueous electrolyte secondary battery according to any one of Constitutions 1 to 7, wherein the heat-resistant layer includes a polymer having an amide bond.

### Constitution 12:

The non-aqueous electrolyte secondary battery according to Constitution 11, wherein the heat-resistant layer further includes a ceramic.

### Constitution 13:

The non-aqueous electrolyte secondary battery according to any one of Constitutions 1 to 12, wherein the lithium-containing composite oxide is represented by a general formula LiₐNiₓCo_{y}M_{z}O_{2-b}, wherein 0.95 ≤ a ≤ 1.2, 0.80 ≤ x ≤ 0.95, 0 ≤ y ≤ 0.20, 0 ≤ z ≤ 0.20, 0 ≤ b ≤ 0.05, x+y+z = 1, and M is at least one element selected from the group consisting of Al, Mn, Fe, Ti, Si, Nb, Mo, W, and Zn.

### Constitution 14:

The non-aqueous electrolyte secondary battery according to Constitution 13, wherein "x" in the general formula satisfies 0.87 ≤ x ≤ 0.95.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer, 50 Base material layer, 51 Heat-resistant layer

## Claims

1. A non-aqueous electrolyte secondary battery, comprising:
a positive electrode;
a negative electrode;
a separator that separates the positive electrode and the negative electrode from each other; and
a non-aqueous electrolyte, wherein
the positive electrode includes a lithium-containing composite oxide and a sulfonate compound present on particle surfaces of the lithium-containing composite oxide,
the sulfonate compound is a compound represented by a formula (I),
the separator has a base material layer and a heat-resistant layer formed on a surface of the base material layer, and the heat-resistant layer faces the positive electrode, and
a thickness T1 of the base material layer and a thickness T2 of the heat-resistant layer satisfy a relationship of T2/T1 ≥ 0.2, 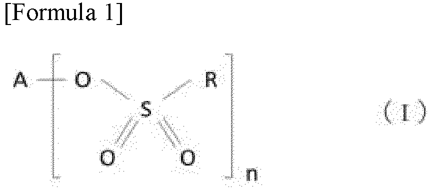
wherein A is a group I element or a group II element, R is a hydrocarbon group, and n is 1 or 2.

2. The non-aqueous electrolyte secondary battery according to claim 1, wherein the A is the group I element.

3. The non-aqueous electrolyte secondary battery according to claim 1, wherein the A is Li.

4. The non-aqueous electrolyte secondary battery according to claim 1, wherein the R is an alkyl group.

5. The non-aqueous electrolyte secondary battery according to claim 1, wherein the R is a methyl group.

6. The non-aqueous electrolyte secondary battery according to claim 1, wherein an amount of the sulfonate compound present on a surface of the lithium-containing composite oxide is less than or equal to 2 mass% relative to a mass of the lithium-containing composite oxide.

7. The non-aqueous electrolyte secondary battery according to claim 1, wherein the lithium-containing composite oxide has a layered rock-salt structure.

8. The non-aqueous electrolyte secondary battery according to claim 1, wherein the heat-resistant layer includes a ceramic-containing polymer containing a ceramic and a polymer.

9. The non-aqueous electrolyte secondary battery according to claim 8, wherein a content rate of the ceramic in the heat-resistant layer is greater than or equal to 20 mass% and less than or equal to 95 mass% relative to a total mass of the heat-resistant layer.

10. The non-aqueous electrolyte secondary battery according to claim 8, wherein the ceramic includes at least one selected from the group consisting of alumina, silica, and titania.

11. The non-aqueous electrolyte secondary battery according to claim 1, wherein the heat-resistant layer includes a polymer having an amide bond.

12. The non-aqueous electrolyte secondary battery according to claim 11, wherein the heat-resistant layer further includes a ceramic.

13. The non-aqueous electrolyte secondary battery according to claim 1, wherein the lithium-containing composite oxide is represented by a general formula LiₐNiₓCo_{y}M_{z}O_{2-b}, wherein 0.95 ≤ a ≤ 1.2, 0.80 ≤ x ≤ 0.95, 0 ≤ y ≤ 0.20, 0 ≤ z ≤ 0.20, 0 ≤ b ≤ 0.05, x+y+z = 1, and M is at least one element selected from the group consisting of Al, Mn, Fe, Ti, Si, Nb, Mo, W, and Zn.

14. The non-aqueous electrolyte secondary battery according to claim 13, wherein "x" in the general formula satisfies 0.87 ≤ x ≤ 0.95.
